# EUROPÄISCHE PATENTANMELDUNG

(11) **EP 3 184 839 A1**
(43) Veröffentlichungstag der Anmeldung: **28.06.2017**
(21) Anmeldenummer: 16202503.5
(22) Anmeldetag: 06.12.2016
(51) Int. Cl.: F16D 23/02

(54) **SYNCHRONISIERUNGSEINHEIT FÜR EIN ZAHNRÄDERWECHSELGETRIEBE**

(30) Priorität: 22.12.2015 EP 15202011
(71) Anmelder: Oerlikon Friction Systems (Germany) GmbH, 28719 Bremen (DE)
(72) Erfinder: Spreckels, Marcus Dr., 28832 Oyten (DE); Bissex, Robert, Nantyffyllon, Maesteg, Mid Glamorgan, CF34 0HG (GB)
(74) Vertreter: Intellectual Property Services GmbH

(57) **Zusammenfassung**

Die Erfindung betrifft eine Synchronisierungseinheit (1) eines schaltbaren Zahnräderwechselgetriebes für ein Fahrzeug. Die Synchronisierungseinheit (1) umfasst einen Reibring (2) mit einer äusseren Einbaufläche (402) und einen Synchronring (3) mit einer inneren Einbaufläche (301). Die äussere Einbaufläche (402) des Reibrings (2) ist als ein erstes in einer um eine Achse (12) der Synchronisierungseinheit (1) verlaufenden Umfangsrichtung (U) geometrisch strukturiertes Profil (7) ausgebildet und die innere Einbaufläche (301) des Synchronrings (1) als ein korrespondierendes zweites in Umfangsrichtung (U) geometrisch strukturiertes Profil (8) ausgebildet. Im Einbauzustand greift das erste Profil (7) des Reibrings (2) in das zweite Profil (8) des Synchronrings (3) derart ein, dass der Reibring (2) in radialer Richtung zur Achse (12) und in Umfangsrichtung (U) am Synchronring (3) gesichert ist. Um die Synchronisierungseinheit (1) weiter zu verbessern ist das erste Profil (7) und das zweite Profil (8) jeweils in Form eines in Umfangsrichtung (U) segmentierten Kurvenzugs (13) umfassend eine Mehrzahl von unmittelbar aneinander anschliessenden Formsegmenten (14) ausgebildet, wobei der segmentierte Kurvenzug (13) mit Formsegmenten (14) über zumindest einen Teil des Umfangs eine zusammenhängende geschlossene Oberfläche (15) bildet.

## Beschreibung

Die Erfindung betrifft eine Synchronisierungseinheit eines schaltbaren Zahnräderwechselgetriebes für ein Fahrzeug gemäss dem Oberbegriff des unabhängigen Anspruchs 1. Die Erfindung betrifft weiter einen Reibring für eine Synchronisierungseinheit gemäss dem Oberbegriff des Anspruchs 10 undeinen Synchronring für eine Synchronisierungseinheit gemäss dem Oberbegriff des unabhängigen Anspruchs 13.

Synchronisierungseinheiten dienen in einem mechanischen schaltbaren Zahnräderwechselgetriebe, z.B. in Fahrzeuggetrieben dazu, die während eines Gangwechsels auftretenden Relativgeschwindigkeiten zwischen Gangrad und Getriebewelle aneinander anzugleichen. Die Synchronisation wird dabei durch Reibung zwischen den entsprechenden Reibpartner erzielt. Die Funktionsweise solcher Getriebe und der Ablauf des Synchronisationsvorgangs sind an sich bekannt und brauchen dem Fachmann hier nicht mehr näher erläutert zu werden.

Zum Schutz gegen vorzeitigen Verschleiss und / oder zur Verbesserung der Reibcharakteristik ist es bekannt, die Reibflächen der einzelnen Komponenten von Synchronisierungseinheiten, die in der Regel aus einem Metall oder einer Metallegierung, wie beispielsweise aus Messing oder Stahl gefertigt sind, mit einer Reibschicht zu versehen. Dabei werden ganz verschiedene Typen von Reibschichten angewandt, z.B. thermische Spritzschichten aus Molybdän, Carbon-Reibschichten oder Reibschichten aus anderen Materialien.

Synchronisierungseinheiten für Zahnräderwechselgetriebe bzw. einzelne Komponenten von Synchronisierungseinheiten sind im Stand der Technik vielfältig und ausführlich beschrieben.

So ist z.B in der EP 2 894 363 A1 eine gattungsgemässe Synchronisierungseinheit gezeigt. Die Synchronisierungseinheit umfasst dabei einen konusförmigen Reibring und einen konusförmigen Synchronring, wobei der Reibring und der Synchronring im Einbauzustand über einen Formschluss miteinander verbunden sind. Der Reibring weist hierzu eine konische äussere Einbaufläche mit einem ersten Profil und der Synchronring eine korrespondierende konische innere Einbaufläche mit einem zweiten Profil auf, wobei im Einbauzustand das erste Profil mit dem zweiten Profil in Eingriff steht. Der Reibring ist über die konische innere Einbaufläche des Synchronrings in axialer und radialer Richtung zu einer axialen Achse der Synchronisierungseinheit gesichert. Zudem weist der Reibring Verdrehsicherungen auf, über welche der Reibring mit dem Synchronring im wesentlichen auch drehfest verankert ist, d.h der Reibring ist bis auf kleine Winkelauslenkungen in einer um die axialen Achse verlaufenden Umfangsrichtung drehfest mit dem Synchronring verbunden.

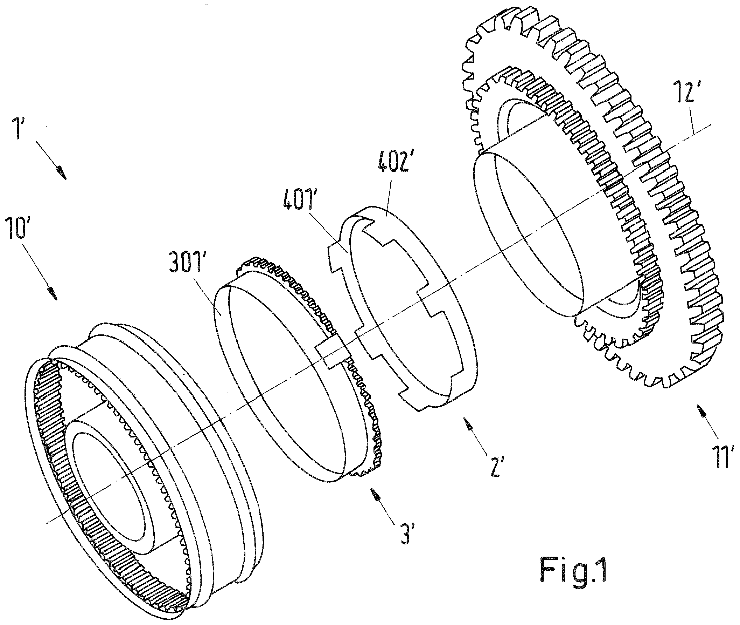

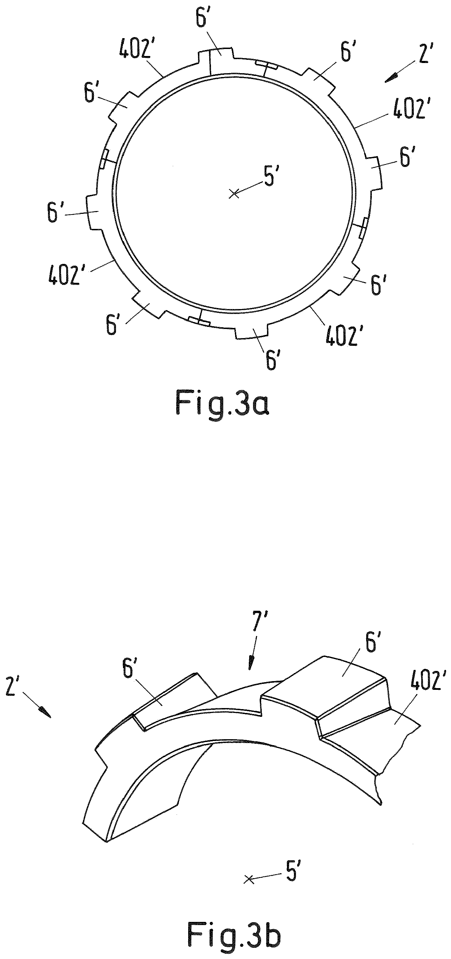

Zur Erläuterung dieser Synchronisierungseinheit wird im Folgenden auf die schematischen Fig. 1 bis Fig. 3b Bezug genommen, anhand derer der zuvor beschriebene Stand der Technik etwas näher beschrieben wird. Zur Unterscheidung des Stands der Technik von der vorliegenden Erfindung sind die Bezugszeichen, die sich auf Merkmale von bekannten Beispielen beziehen mit einem Hochkomma versehen, während Merkmale erfindungsgemässer Ausführungsbeispiele mit Bezugszeichen versehen sind, die kein Hochkomma tragen.

Die Synchronisierungseinheit wird im Folgenden gesamthaft mit dem Bezugszeichen 1, der Reibring mit dem Bezugszeichen 2 und der Synchronring mit dem Bezugszeichen 3 bezeichnet.

Fig. 1 zeigt eine Explosionsdarstellung einer bekannten Synchronisierungseinheit 1'umfassend einen Reibring 2'und einen Synchronring 3'.

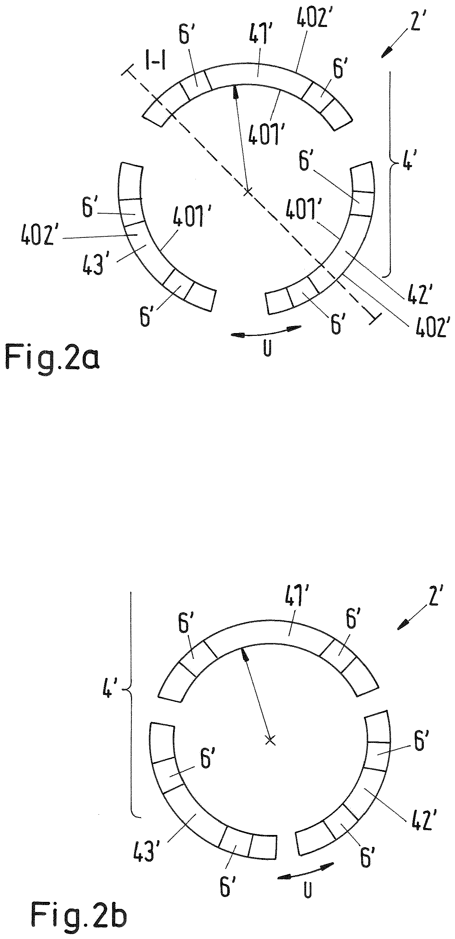

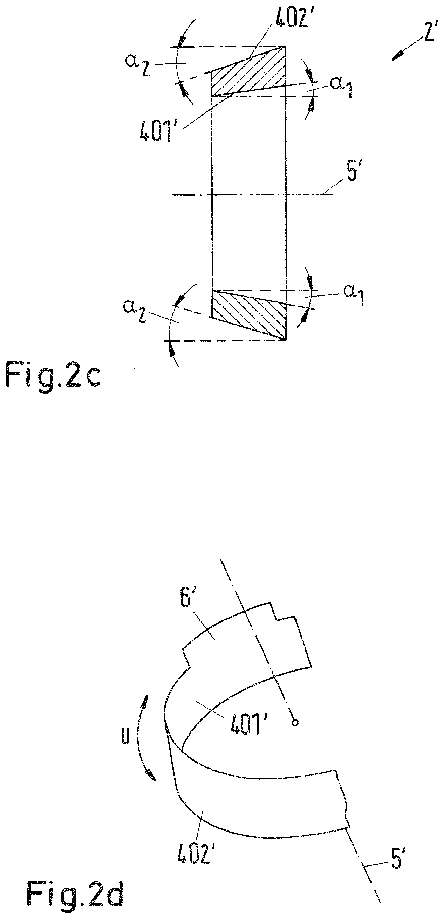

Die Fig. 2a bzw. Fig. 2b, die Fig. 2c und Fig. 2d zeigen in einer schematischen Darstellung ein und dasselbe Beispiel des in Fig. 1 abgebildeten Reibrings 2' der bekannten Synchronisierungseinheit 1'. Fig. 2a zeigt den Reibring 2' mit segmentiertem Reibringkörper 4' dabei in einer expandierten Konfiguration, während Fig. 2b denselben Reibring 2' in einer zusammengezogenen Konfiguration zeigt. Fig. 2c zeigt zum besseren Verständnis einen Schnitt entlang der Schnittlinie I-I gemäss Fig. 2a, während anhand der Fig. 2d ein Abschnitt des Reibrings 2' gemäss Fig. 2a in perspektivischer Ansicht gezeigt ist.

Wie anhand der Fig. 2a und Fig. 2b deutlich zu erkennen ist, ist der Reibringkörper 4' in diesem Beispiel ein segmentierter Reibringkörper 4', der eine Mehrzahl von separaten Reibringsegmenten 41', 42', 43', im vorliegenden Beispiel also drei Reibringsegmenten 41', 42', 43' umfasst, die in einer ringförmigen Anordnung den Reibringkörper 4' bilden. Der Reibring 2' kann aber auch aus einer anderen Anzahl von Reibringsegmenten 41', 42', 43'aufgebaut sein

Gemäss Fig. 2c umfasst der Reibring 2' einen konischen Reibringkörper 4' mit einer inneren Reibfläche 401' und eineräusseren Einbaufläche 402', die den Reibringkörper 4' in einer senkrecht zu einer axialen Reibringachse 5' verlaufenden radialen Richtung jeweils begrenzen. Dabei erstreckt sich die innere Reibfläche 401' unter einem vorgebaren Reibwinkel α₁ und die äussere Einbaufläche 402' unter einem vorgebaren Einbauwinkel α₂ jeweils konisch entlang der Reibringachse 5'. Der Reibwinkel α₁ kann dabei verschieden vom Einbauwinkel α₂ ausgebildet sein.

Wie aus Fig. 2d hervorgeht, sind am Reibringkörper 4' eine Mehrzahl von Verdrehsicherungen 6' bzw. Laschen vorgesehen, die sich entlang der Reibringachse 5' erstrecken. Die Verdrehsicherungen 6' sind in Umfangsrichtung U gleichmässig am Reibringkörper 4' angeordnet und greifen im Einbauzustand in am Synchronring 3'vorgesehene korrespondierende Taschen. Über die Verdrehsicherungen 6' ist der Reibring 2' mit dem Synchronring 3' im wesentlichen drehfest verankert, d.h die Verdrehsicherungen 6' verhindern im Betriebszustand der Synchronisierungseinheit 1' ein Verdrehen des Reibrings 2' am Synchronring 3'in Umfangsrichtung U.

Die formschlüssige Kopplung des segmentierten Reibrings zum Synchronring in Umfangsrichtung wird beim beschriebenen Beispiel des Standes der Technik durch eine sich in axialer Richtung erstreckende Taschen-Laschen Kopplung erreicht. Diese Art der Kopplung beansprucht je nach Ausführung einen zusätzlichen axialen Bauraum, der nicht als Reibfläche genutzt werden kann.

Dieser zusätzliche für die Kopplung benötigte Bauraum kann eingespart werden, indem die formschlüssige Kopplung sich in radialer statt in axialer Richtung erstreckt. Die positive Form (z.B Lasche) kann sich dabei am segmentierten Ring radial nach aussen erstrecken und in eine Negativ-Form (z.B Tasche) am Synchronring eingreifen oder die Positiv-Form kann sich umgekehrt vom Synchronring radial nach innen erstrecken und in eine entsprechende Negativ-Form am segmentierten Ring eingreifen.

Auch diese Variante der formschlüssigen Kopplung des segmentierten Reibrings zum Synchronring in Umfangsrichtung geht aus der EP 2 894 363 A1 hervor. In den Fig. 2a und Fig. 2b der EP 2 894 363 A1 ist ein Beispiel einer Synchronisierungseinheit 1' gezeigt, bei welchem sich die Verdrehsicherungen 6' am Reibring 2' nicht in axialer Richtung sondern im Wesentlichen senkrecht zur Reibringachse 5' erstrecken. Die Verdrehsicherungen 6' sind dabei in Form von Erhöhungen bzw. Verzahnungen ausgebildet, die in radialer Richtung von der äusseren Einbaufläche 402' des segmentierten Reibrings 2' abstehen. Der segmentierte Reibring 2' weist somit an seiner äusseren Einbaufläche 402' ein erstes Profil 7' auf, das sich abwechselnd aus Erhöhungen und Vertiefungen zusammensetzt. Umgekehrt hat der Synchronring 3' an seiner inneren Einbaufläche 301' ein zweites Profil, das korrespondierende Erhöhungen und Vertiefungen aufweist, die sich ebenfalls in radialer Richtung erstrecken. Auch in diesem Beispiel einer Synchronisierungseinheit 1' ist über die Verdrehsicherungen 6' der Reibring 2' mit dem Synchronring 3' im wesentlichen drehfest verankert, d.h die Verdrehsicherungen 6' verhindern im Betriebszustand der Synchronisierungseinheit 1' ein Verdrehen des Reibrings 2'am Synchronring 3' in Umfangsrichtung U.

Gemäss Fig. 1 umfasst die Synchronisierungseinheit 1' neben dem Reibring 2' und dem Synchronring 3' in an sich bekannter Weise weiter eine Schiebemuffe 10', sowie ein Gangrad 11', wobei die vorgenannten Komponenten derart koaxial zu einer Achse 12' der Synchronisierungseinheit 1' angeordnet sind, dass im Betriebszustand der Synchronring 3' durch die Schiebemuffe 10' gemeinsam mit dem Reibring 2' entlang der Achse 12' in Richtung zum Gangrad 11' verschiebbar ist, so dass die innere Reibfläche 401' des Reibringkörpers 4' mit dem Gangrad 11' in Eingriff bringbar ist.

Durch die Anwendung der beschriebenen Synchronisierungseinheit konnte in der Praxis schon einiges verbessert werden.

Aufgrund der Tatsache, dass sich die formschlüssige Kopplung des segmentierten/geschlitzten Reibrings zum Synchronring in Umfangsrichtung in radialer statt in axialer Richtung erstreckt, konnte der bisher für die Kopplung benötigte zusätzliche axiale Bauraum, der nicht als Reibfläche zur Verfügung stand, eingespart werden. Die axiale Ausdehnung der Synchronisierungseinheit konnte hierdurch gegenüber anderen aus dem Stand der Technik bekannten Synchronisierungseinheiten wesentlich verkürzt werden.

Es hat sich aber auch gezeigt, dass selbst diese verbesserte und sich in der Praxis mittlerweile bewährte Synchronisierungseinheit noch Verbesserungspotential hat.

Ein wesentlicher Nachteil der Synchronisierungseinheit liegt darin, dass die wirksame Fläche zur Kraftübertragung auf die einzelnen Verdrehsicherungen, d.h die Zahnflanken des ersten und zweiten Profils, am Reibring bzw. Synchronring beschränkt ist. Die Sicherung des Reibrings am Synchronring in Umfangsrichtung erfolgt daher lediglich über eine verhältnismässig kleine Fläche, nämlich die Fläche der Zahnflanken. Dies hat zur Folge, dass die einzelnen Zahnflanken einer hohen mechanischen Beanspruchung ausgesetzt sind, was die Abnutzung bzw. den Verschleiss der Zahnflanken fördert. Um dem so verursachten Verschleiss der Zahnflanken entgegenzuwirken, kann eine aufwändige, kostenintensive Beschichtung der Zahnflanken notwendig sein.

Es besteht daher die potentielle Gefahr, dass es aufgrund der verstärkten Abnutzung der Zahnflanken auch zu Schäden an den Zahnflanken kommt, z.B können die Zahnflanken ganz oder teilweise vom Reibring bzw. Synchronring abbrechen, wodurch ein sicherer Betrieb der Synchronisierungseinheit nicht mehr gewährleistet ist. Um Schäden an den Zahnflanken zu verhindern, ist eine aufwändige Oberflächenhärtung der Zahnflanken oder der Einsatz hochwertiger, teurer Werkstoffe häufig notwendig.

Trotz der Sicherung des Reibrings gegen eine Verdrehung in Umfangsrichtung in Bezug auf den Synchronring ist es darüber hinaus von Nachteil, dass es aufgrund der Abnutzung der Verdrehsicherungen zu unkontrollierten Bewegungen, d.h zu kleinen Auslenkungen, in Umfangsrichtung kommt.

Diese unkontrollierten Bewegungen des Reibrings am Synchronring in Umfangsrichtung können sich z.B. in schädlichen Vibrationen äussern, und stören die Zuverlässigkeit und Genauigkeit der Synchronisation. Die genannten Effekte werden umso bedeutender, je höher das durch die Synchronisationseinheit zu übertragende Synchronisationsmoment ist.

Ein weiterer Nachteil der bekannten Synchronisierungseinheit ist, dass ausreichend dimensionierte Verzahnungen eine entsprechend grosse Abmessung in radialer Richtung erfordern. Dies führt zu einer erhöhten radialen Abmessung des Reibrings und des Synchronrings und damit der gesamten Synchronisierungseinheit und damit auch des gesamten Schaltgetriebes.

Ein wesentlicher Nachteil der bekannten Synchronisierungseinheit besteht auch darin, dass der Reibring bzw. Synchronring aufgrund seiner komplexen Form, welche durch die Verzahnung bedingt ist, nur über einen aufwändigen, teuren Schmiedeprozess bzw. Sinterprozess herstellbar ist. Der Reibring bzw. Synchronring kann somit aufgrund seiner aufwändigen Geometrie nicht über einen einfachen und kostengünstigen Tiefziehprozess hergestellt werden.

Die Aufgabe der Erfindung ist es daher, eine weiter verbesserte Synchronisierungseinheit vorzuschlagen, bei welcher der Reibring am Synchronring in Umfangsrichtung gesichert ist, wobei die Kraftübertragung grossflächiger erfolgt und mit geringerem Verschleiss einhergeht, so dass unkontrollierte Bewegungen zwischen dem Reibring und dem Synchronring in Umfangsrichtung reduziert werden, und die Synchronisierungseinheit geringe bauliche Abmessungen in axialer und radialer Richtung aufweist, und die Synchronisierungseinheit einfacher ,schneller und aus günstigeren Werkstoffen herstellbar ist, so dass die aus dem Stand der Technik bekannten Nachteile weitgehend vermieden werden. Eine weitere Aufgabe der Erfindung besteht darin, einen verbesserten Reibring und einen verbesserten Synchronring für eine Synchronisierungseinheit bereitzustellen.

Die diese Aufgaben lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Die Erfindung betrifft somit Synchronisierungseinheit für ein Zahnräderwechselgetriebe eines Fahrzeuges, umfassend einen Reibring mit einer äusseren Einbaufläche und einen Synchronring mit einer inneren Einbaufläche, wobei sich die äussere Einbaufläche und die innere Einbaufläche unter einem vorgebbaren Einbauwinkel konisch entlang einer axialen Achse der Synchronisierungseinheit erstrecken, und die äussere Einbaufläche des Reibrings als ein erstes in einer um die Achse verlaufenden Umfangsrichtung geometrisch strukturiertes Profil ausgebildet ist und die innere Einbaufläche des Synchronrings als ein korrespondierendes zweites in Umfangsrichtung geometrisch strukturiertes Profil ausgebildet ist, wobei im Einbauzustand das erste Profil des Reibrings in das zweite Profil des Synchronrings derart eingreift, dass der Reibring in radialer Richtung zur Achse und in Umfangsrichtung am Synchronring gesichert ist.

Erfindungsgemäss sind bei der Synchronisierungseinheit das erste Profil des Reibrings und das zweite Profil Synchronrings jeweils in Form eines in Umfangsrichtung segmentierten Kurvenzugs umfassend eine Mehrzahl von unmittelbar aneinander anschliessenden Formsegmenten ausgebildet, wobei der segmentierte Kurvenzug mit den Formsegmenten über zumindest einen Teil des Umfangs eine zusammenhängende geschlossene Oberfläche bildet.

Im Rahmen dieser Erfindung bildet der segmentierte Kurvenzug mit den Formsegmenten über zumindest einen Teil des Umfangs des Reibrings und/oder des Synchronrings eine zusammenhängende geschlossene Oberfläche. Sind der Reibring und/oder der Synchronring einteilig, ohne Schlitz ausgebildet, bildet der segmentierte Kurvenzug mit den Formsegmenten eine über den gesamten Umfang des Reibrings und/oder Synchronrings zusammenhängende geschlossene Oberfläche. Sind der Reibring und/oder der Synchronring dagegen einteilig, mit Schlitz, oder zwei- oder mehrsegmentig ausgebildet, bildet der segmentierte Kurvenzug mit den Formsegmenten nur über einen Teil des Umfangs des Reibrings und/oder Synchronrings eine zusammenhängende geschlossene Oberfläche, d.h die zusammenhängende geschlossene Oberfläche ist lediglich im Bereich des Schlitzes beziehungsweise zwischen den einzelnen Segmenten unterbrochen. Der segmentierte Kurvenzug setzt sich im Rahmen der Erfindung nur aus Formsegmenten zusammen, deren Verlauf in Umfangsrichtung gesehen durch eine stetige mathematische Funktion beschrieben ist. Dies im Unterschied zum Stand der Technik, wo sich der segmentierte Kurvenzug aus Formsegmenten zusammensetzt, deren Verlauf in Umfangsrichtung gesehen durch eine unstetige mathematische Funktion beschrieben ist. Dadurch weist die Oberfläche eines Formsegmentes keine überstehenden Flächenanteile auf, die alleine das Synchronisationsmoment aufbringen müssen. Hierdurch wird eine vergrösserte wirksame Kontaktfläche zwischen dem Reibring und dem Synchronring bereitgestellt, die zur Übertragung des Synchronisationsmoments genutzt werden kann.

Ein wesentlicher Vorteil der erfindungsgemässen Synchronisierungseinheit liegt darin, dass eine vergrösserte wirksame Kontaktfläche zwischen dem Reibring und dem Synchronring bereitgestellt wird, die zur Übertragung des Synchronisationsmoments genutzt werden kann. Im Prinzip kann die gesamte zur Verfügung stehende Kontaktfläche zwischen dem ersten Profil des Reibrings und dem zweiten Profil des Synchronrings zur Kraftübertragung verwendet werden. Im Unterschied zum Stand der Technik erfolgt die Sicherung des Reibrings am Synchronring in Umfangsrichtung daher über einen verhältnismässig grossen Oberflächenanteil der Segmentoberfläche. Dies hat zur Folge, dass sich die mechanische Beanspruchung zur Übertragung des Synchronisationsmoments auf diese Oberfläche im Gesamten verteilt,was sich positiv auf die Abnutzung bzw. den Verschleiss der Synchronisierungseinheit auswirkt. Dadurch kann auf eine aufwändige und kostenintensive Beschichtung der Segmentoberflächen und auf den Einsatz hochwertiger, teurer Werkstoffe verzichtet werden.

Auch besteht nicht die Gefahr, dass es aufgrund von Abnutzungen zu Schäden an der Synchronisierungseinheit kommt, so dass ein sicherer Betrieb der Synchronisierungseinheit gewährleistet ist.

Aufgrund der geringen Abnutzung der Segmentoberflächen beider Profile, kommt es im Unterschied zum Stand der Technik nicht zu unkontrollierten Bewegungen, d.h zu kleinen Auslenkungen, in Umfangsrichtung. Dadurch können schädliche Vibrationen, welche die Zuverlässigkeit und Genauigkeit der Synchronisation stören, verhindert werden.

Aufgrund der erfindungsgemässen Ausbildung des ersten und zweiten Profils wird zudem erreicht, dass die Abmessung des Reibrings und des Synchronrings und damit der gesamten Synchronisierungseinheit und damit auch des gesamten Schaltgetriebes in radialer Richtung gering gehalten wird.

Auch wird durch die erfindungsgemässe Ausbildung des ersten und zweiten Profils die Verdrehbarkeit des Reibrings zum Synchronring in Umfangsrichtung minimiert.

Als besonders wichtiger Vorteil der Erfindung ist zu betonen, dass aufgrund der erfindungsgemässen Ausbildung des ersten und zweiten Profils der Reibring und/oder der Synchronring über einen Tiefziehprozess hergestellt werden können. Dies macht die Herstellung der Synchronisierungseinheit einfach und kostengünstig.

Als besonders vorteilhaft hat es sich herausgestellt, wenn die einzelnen Formsegmente des segmentierten Kurvenzugs als gerade Kurven, d.h als Geraden, und /oder gebogene Kurven, insbesondere konvexe oder konkave Kurven, ausgebildet sind. Unter dem Begriff konvex ist zu verstehen, dass die Kurve entgegen einer Achse der Synchronisierungseinheit gekrümmt ist, wobei unter dem Begriff konkav zu verstehen ist, dass die Kurve in Richtung einer Achse der Synchronisierungseinheit gekrümmt ist. Die einzelnen Formsegmente des segmentierten Kurvenzugs können dabei identisch oder unterschiedlich ausgebildet sein. D.h der segmentierte Kurvenzug kann sich z.B nur aus geraden Kurven oder z.B nur aus gebogenen Kurven zusammensetzen. Alternativ ist es aber auch möglich, dass sich der segmentierte Kurvenzug aus sowohl geraden wie auch gebogenen Kurven zusammensetzt.

In einem bevorzugten Ausführungsbeispiel ist der segmentierte Kurvenzug "splineartig" ausgebildet. Der Begriff "splineartig" bedeutet im Rahmen dieser Anmeldung, dass der segmentierte Kurvenzug in Umfangsrichtung über die gesamte Länge stetig und differenzierbar ist oder nur über die Länge des jeweiligen Formsegments stetig und differenzierbar ist. D.h der segmentierte Kurvenzug kann sich z.B abwechselnd aus konvex und konkav gebogenen Kurven zusammensetzen. Durch die "splineartige" Ausbildung des segmentierten Kurvenzugs wird erreicht, dass das erste Profil und das zweite Profil geschmeidig ineinandergreifen, was eine hohe Kraftübertragung bei einem geringen Verschleiss zur Folge hat.

In einem für die Praxis sehr wichtigen Ausführungsbeispiel setzt sich der segmentierte Kurvenzug polygonartig aus geraden Kurven zusammen. Unter dem Begriff "polygonartig" ist dabei zu verstehen, dass der segmentierte Kurvenzug n-eckig ausgebildet ist und sich aus einer Mehrzahl von geraden Kurven zusammensetzt. Die geraden Kurven des segmentierten Kurvenzugs können dabei gleich lang oder unterschiedlich lang ausgebildet sein. Als positiv hat es sich hierbei auch herausgestellt, wenn zwei benachbarte gerade Kurven unter einem Polygonwinkel von 120° bis 170° zueinander angeordnet sind, wobei der Polygonwinkel besonders bevorzugt 150° beträgt.

Bevorzugt, aber nicht notwendig, kann der segmentierte Kurvenzug zur Achse der Synchronisierungseinheit rotationsymmetrisch ausgebildet sein. Hierdurch werden die Fertigung und der Zusammenbau der Synchronisierungseinheit erheblich vereinfacht.

Auch hat es sich als vorteilhaft herausgestellt, wenn am ersten Profil und /oder am zweiten Profil eine Beschichtung, insbesondere eine reibungsvermindernde Beschichtung, z.B eine DLC-Beschichtung, vorgesehen ist. In einem für die Praxis sehr wichtigen Ausführungsbeispiel ist der Reibring und /oder der Synchronring ein Blechumformteil oder ein Sinterstahlteil oder ein geschmiedetes Stahlteil oder ein geschmiedetes Messingteil. Hierdurch wird die Herstellung der Synchronisierungseinheit einfach und günstig.

Die erfindungsgemässe Synchronisierungseinheit findet Anwendung in einem Zahnräderwechselgetriebe für ein Fahrzeug, insbesondere für einen Personenkraftwagen, einen Transporter oder eine Lastkraftwagen.

Die vorliegende Erfindung betrifft weiter einen Reibring für eine erfindungsgemässe Synchronisierungseinheit. Der Reibring umfasst einen konischen Reibringkörper mit einer inneren Reibfläche und einer äusseren Einbaufläche, die den Reibringkörper in einer senkrecht zu einer axialen Reibringachse verlaufenden radialen Richtung jeweils begrenzen. Die innere Reibfläche erstreckt sich unter einem vorgebaren Reibwinkel und die äussere Einbaufläche erstreckt sich unter einem vorgebaren Einbauwinkel konisch entlang der Reibringachse. Die äussere Einbaufläche des Reibrings ist als ein erstes in einer um die Reibringachse verlaufenden Umfangsrichtung geometrisch strukturiertes Profil ausgebildet.

Erfindungsgemäss ist das erste Profil in Form eines in Umfangsrichtung segmentierten Kurvenzugs umfassend eine Mehrzahl von unmittelbar aneinander anschliessenden Formsegmenten ausgebildet. Der segmentierte Kurvenzug mit Formsegmenten bildet über zumindest einen Teil des Umfangs des Reibringkörpers eine zusammenhängende geschlossene Oberfläche.

Als besonders vorteilhaft hat es sich herausgestellt, wenn die einzelnen Formsegmente des segmentierten Kurvenzugs als gerade Kurven und /oder gebogene Kurven, insbesondere konvexe oder konkave Kurven, ausgebildet sind.

In einem für die Praxis sehr wichtigen Ausführungsbeispiel setzt sich der segmentierte Kurvenzug des ersten Profils polygonartig aus geraden Kurven zusammen. Unter dem Begriff "polygonartig" ist dabei zu verstehen, dass der segmentierte Kurvenzug n-eckig ausgebildet ist und sich aus einer Mehrzahl von geraden Kurven zusammensetzt. Auch ist es aber möglich, dass der segmentierte Kurvenzug des ersten Profils splineartig ausgebildet ist. Der Begriff "splineartig" bedeutet im Rahmen dieser Anmeldung, dass der segmentierte Kurvenzug in Umfangsrichtung über die gesamte Länge stetig und differenzierbar ist oder nur über die Länge des jeweiligen Formsegments stetig und differenzierbar ist. D.h der segmentierte Kurvenzug kann sich z.B abwechselnd aus konvex und konkav gebogenen Kurven zusammensetzen.

Die vorliegende Erfindung betrifft zudem einen Synchronring für eine erfindungsgemässe Synchronisierungseinheit. Der Synchronring umfasst einen Synchronringkörper mit einer inneren Einbaufläche, die sich unter einem vorgebaren Einbauwinkel konisch entlang einer Synchronringachse erstreckt. Die innere Einbaufläche des Synchronrings ist als ein zweites in einer um die Synchronringachse verlaufenden Umfangsrichtung geometrisch strukturiertes Profil ausgebildet.

Erfindungsgemäss ist das zweite Profil in Form eines in Umfangsrichtung segmentierten Kurvenzugs umfassend eine Mehrzahl von unmittelbar aneinander anschliessenden Formsegmenten ausgebildet. Der segmentierte Kurvenzug mit Formsegmenten bildet über zumindest einen Teil des Umfangs eine zusammenhängende geschlossene Oberfläche.

Als besonders vorteilhaft hat es sich herausgestellt, wenn die einzelnen Formsegmente des segmentierten Kurvenzugs als gerade Kurven und /oder gebogene Kurven, insbesondere konvexe oder konkave Kurven, ausgebildet sind.

In einem für die Praxis sehr wichtigen Ausführungsbeispiel setzt sich der segmentierte Kurvenzug des zweiten Profils polygonartig aus geraden Kurven zusammen. Unter dem Begriff "polygonartig" ist dabei zu verstehen, dass der segmentierte Kurvenzug n-eckig ausgebildet ist und sich aus einer Mehrzahl von geraden Kurven zusammensetzt. Auch ist es aber möglich, dass der segmentierte Kurvenzug des zweiten Profils splineartig ausgebildet ist. Der Begriff "splineartig" bedeutet im Rahmen dieser Anmeldung, dass der segmentierte Kurvenzug in Umfangsrichtung über die gesamte Länge stetig und differenzierbar ist oder nur über die Länge des jeweiligen Formsegments stetig und differenzierbar ist. D.h der segmentierte Kurvenzug kann sich z.B abwechselnd aus konvex und konkav gebogenen Kurven zusammensetzen. Im Folgenden wird die Erfindung an Hand der schematischen Zeichnungen näher erläutert. Es zeigen:
- Fig. 1: Eine aus dem Stand der Technik bekannte Synchronisierungseinheit;
- Fig. 2a: ein erstes Beispiel eines bekannten segmentierten Reibrings mit axialen Vedrehsicherungen in einer expandierten Konfiguration für eine Synchronisierungseinheit nach Fig.1.
- Fig. 2b: den Reibring gemäss Fig. 2a in einer zusammengezogenen Konfiguration;
- Fig. 2c: einen Schnitt entlang der Schnittlinie I-I gemäss Fig. 2a;
- Fig. 2d: einen Abschnitt des Rebrings gemäss Fig. 2a bzw. Fig. 2b in perspektivischer Ansicht;
- Fig. 3a: ein zweites Beispiel eines bekannten segmentierten Reibrings mit radialen Verdrehsicherungen;
- Fig. 3b: einen Abschnitt des Reibrings gemäss Fig. 3a in perspektivischer Ansicht;
- Fig. 4a: eine perspektivische Ansicht eines Ausführungsbeispiels einer erfindungsgemässen Synchronisierungseinheit;
- Fig. 4b:: eine perspektivische Ansicht eines erfindungsgemässen Synchronrings für eine Synchronisierungseinheit nach Fig.4a;
- Fig. 4c: eine perspektivische Ansicht eines erfindungsgemässen Reibrings für eine Synchronisierungseinheit nach Fig.4a;
- Fig. 4d:: eine schematische Darstellung des Profils des Reibrings nach Fig. 4c.
- Fig. 5a :: eine schematische Darstellung eines Profils eines zweiten Ausführungsbeispiels eines erfindungsgemässen Reibrings,
- Fig. 5b :: eine schematische Darstellung eines Profils eines dritten Ausführungsbeispiels eines erfindungsgemässen Reibrings,
- Fig. 5c :: eine schematische Darstellung eines Profils eines vierten Ausführungsbeispiels eines erfindungsgemässen Reibrings und
- Fig. 5d :: eine schematische Darstellung eines Profils eines fünften Ausführungsbeispiels eines erfindungsgemässen Reibrings.

Wie bereits erwähnt, zeigen die Fig. 1 bis Fig.3b den Stand der Technik und wurden bereits eingangs eingehend erläutert, so dass hier auf eine weitere Diskussion verzichtet werden kann.

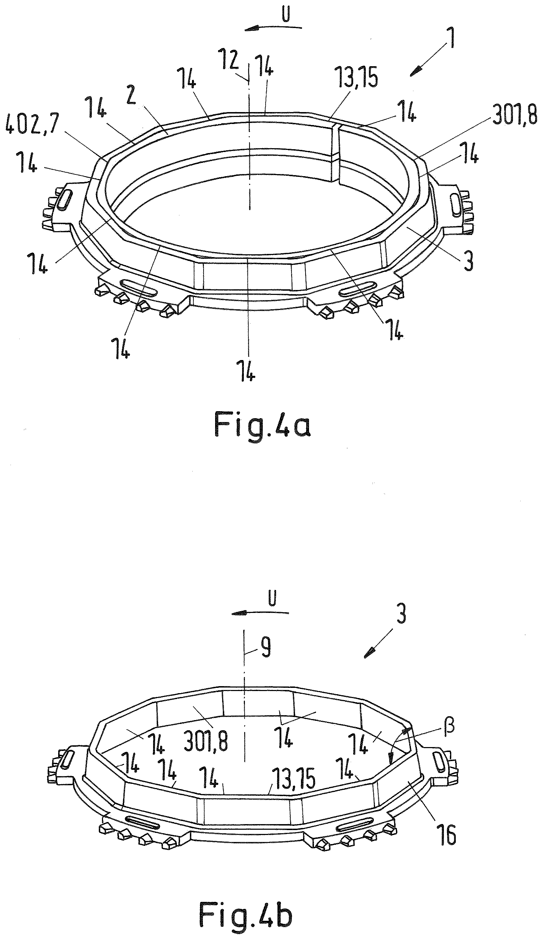

Fig. 4a zeigt in perspektivischer Ansicht ein erstes Ausführungsbeispiel einer erfindungsgemässen Synchronisierungseinheit, die im Folgenden gesamthaft mit dem Bezugszeichen 1 bezeichnet wird. Die in den Fig. 4a bis Fig. 5d verwendeten Bezugszeichen tragen dabei kein Hochkomma, da sich diese Figuren auf Ausführungsbeispiele der vorliegenden Erfindung beziehen. Wie bereits oben erwähnt, tragen nur die Bezugszeichen der Fig. 1 bis Fig. 3b ein Hochkomma, da diese sich auf den bekannten Stand der Technik beziehen.

Die Synchronisierungseinheit 1 umfasst in an sich bekannter Weise einen konusförmigen Reibring 2 und einen konusförmigen Synchronring 3, welche über einen Formschluss miteinander verbunden sind. Der Reibring 2 weist hierzu eine konische äussere Einbaufläche 402 und der Synchronring 3 eine konische innere Einbaufläche 301 auf, wobei sich die äussere Einbaufläche 402 und die innere Einbaufläche 301 unter einem vorgebbaren Einbauwinkel konisch entlang einer axialen Achse 12 der Synchronisierungseinheit 1 erstrecken. Die äussere Einbaufläche 402 des Reibrings 2 ist als ein erstes in einer um die Achse 12 verlaufenden Umfangsrichtung U geometrisch strukturiertes Profil 7 ausgebildet und die innere Einbaufläche 301 des Synchronrings 3 ist als ein korrespondierendes zweites in Umfangsrichtung U geometrisch strukturiertes Profil 8 ausgebildet. Im Einbauzustand greift das erste Profil 7 des Reibrings 2 in das zweite Profil 8 des Synchronrings 3 derart ein, dass der Reibring 2 in radialer Richtung zur Achse 12 und in Umfangsrichtung U am Synchronring 3 gesichert ist. Erfindungsgemäss ist das erste Profil 7 und das zweite Profil 8 jeweils in Form eines in Umfangsrichtung U segmentierten Kurvenzugs 13 umfassend eine Mehrzahl von unmittelbar aneinander anschliessenden Formsegmenten 14 ausgebildet. Da der Reibring 2 in diesem Ausführungsbeispiel geschlitzt ausgeführt ist, bildet der segmentierte Kurvenzug 13 mit Formsegmenten14 über einen Teil des Umfangs des Reibrings 2 eine zusammenhängende geschlossene Oberfläche 15, d.h die zusammenhängende geschlossene Oberfläche 15 ist lediglich im Bereich des Schlitzes unterbrochen. Dies im Unterschied zum Synchronring 3, bei welchem der segmentierte Kurvenzug 13 mit Formsegmenten14 eine über den gesamten Umfang des Synchronrings 3 zusammenhängende geschlossene Oberfläche 15 bildet. Über den segmentierten Kurvenzug 13 mit Formsegmenten 14 des ersten Profils 7 und den segmentierten Kurvenzug 13 mit Formsegmenten 14 des zweiten Profils 8 sind der Reibring 2 und der Synchronring 3 im Wesentlichen drehfest miteinander verankert, d.h der Reibring 2 ist bis auf kleine Winkelauslenkungen in Umfangsrichtung U drehfest mit dem Synchronring 3 verbunden.

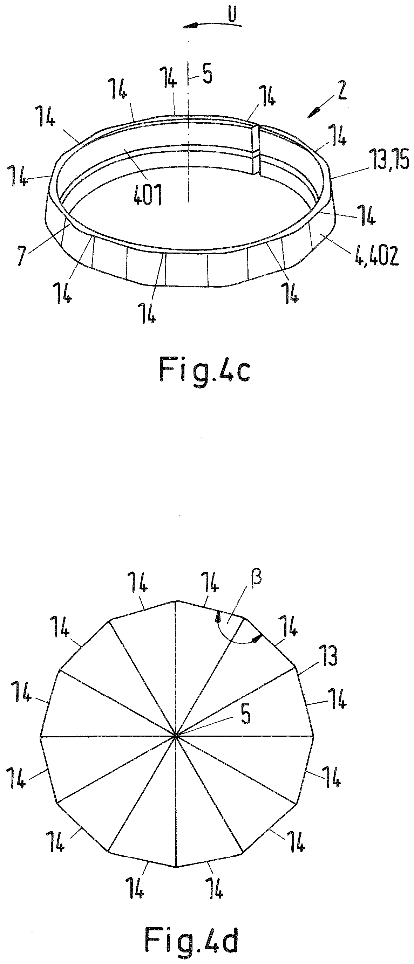

Fig. 4b und Fig. 4c zeigen in einer perspektivischen Darstellung separat den den Synchronring 3 und den Reibring 2 der erfindungsgemässen Synchronisierungseinheit 1 nach Fig.4a.

Gemäss Fig. 4c umfasst der Reibring 2 einen konischen Reibringkörper 4 mit einer inneren Reibfläche 401 und einer äusseren Einbaufläche 402, die den Reibringkörper 4 in einer senkrecht zu einer axialen Reibringachse 5 verlaufenden radialen Richtung jeweils begrenzen. Die innere Reibfläche 401 erstreckt sich unter einem vorgebaren Reibwinkel und die äussere Einbaufläche 402 erstreckt sich unter einem vorgebaren Einbauwinkel konisch entlang der Reibringachse 5. Die äussere Einbaufläche 402 des Reibrings 2 ist als ein erstes in einer um die Reibringachse 5 verlaufenden Umfangsrichtung U geometrisch strukturiertes Profil 7 ausgebildet. Das erste Profil 7 ist dabei in Form eines in Umfangsrichtung U segmentierten Kurvenzugs 13 umfassend eine Mehrzahl von unmittelbar aneinander anschliessenden Formsegmenten 14 ausgebildet. Da der Reibring 2 in diesem Ausführungsbeispiel geschlitzt ausgeführt ist, bildet der segmentierte Kurvenzug 13 mit Formsegmenten14 über einen Teil des Umfangs des Reibrings 2 eine zusammenhängende geschlossene Oberfläche 15, d.h die zusammenhängende geschlossene Oberfläche 15 ist lediglich im Bereich des Schlitzes unterbrochen.

Wie anhand von Fig. 4d deutlich zu erkennen ist, sind die gesamten Formsegmente 14 des segmentierten Kurvenzugs 13 des ersten Profils 7 des Reibrings 2 als gerade Kurven, d.h Geraden ausgebildet. Der segmentierte Kurvenzug 13 ist daher polygonartig ausgebildet. Im gezeigten Ausführungsbeispiel setzt sich der segmentierte Kurvenzug 13 aus zwölf geraden Kurven zusammen, die unter einem Polygonwinkel β von 150°zueinander angeordnet sind. Der segmentierte Kurvenzug 13 ist dabei rotationsymmetrisch zur Reibringachse 5 ausgebildet.

In diesem Ausführungsbeispiel ist der Reibringkörper 4 einstückig, geschlitzt ausgebildet, d.h der segmentierte Kurvenzug 13 mit Formsegmenten 14 bildet über einen Teil des Umfangs des Reibringkörpers 4 eine zusammenhängende geschlossene Oberfläche 15Auch kann der Reibringkörper 4 wie aus dem Stand der Technik bekannt (Fig. 2a und Fig. 2b) aus einer Mehrzahl von separaten Reibringsegmenten aufgebaut sein, die in einer ringförmigen Anordnung den Reibringkörper 4 bilden,so dass auch hier der segmentierte Kurvenzug 13 mit Formsegmenten 14 nur über einen Teil des Umfangs des Reibringkörpers 4 eine zusammenhängende geschlossene Oberfläche 15 bildet. Zudem ist eine Ausführungsform des Reibringes 2 ohne Schlitz möglich, bei welcher der segmentierte Kurvenzug 13 mit Formsegmenten 14 wie er in Fig.4d dargestellt ist, eine über den gesamten Umfang des Reibringes 2 zusammenhängende geschlossene Oberfläche 15 bildet.

Gemäss Fig. 4b umfasst der Synchronring 3 einen konischen Synchronringkörper 16 mit einer inneren Einbaufläche 301, die sich unter einem vorgebaren Einbauwinkel konisch entlang einer Synchronringachse 9 erstreckt. Die innere Einbaufläche 301 des Synchronringkörpers 16 ist als ein zweites in einer um die Synchronringachse 9 verlaufenden Umfangsrichtung U geometrisch strukturiertes Profil 8 ausgebildet. Das zweite Profil 8 ist dabei korrespondierend zum ersten Profil 7 des Reibrings 2 ausgebildet, d.h auch das zweite Profil 8 ist erfindungsgemäss in Form eines in Umfangsrichtung U segmentierten Kurvenzugs 13 umfassend eine Mehrzahl von unmittelbar aneinander anschliessenden Formsegmenten 14 ausgebildet. Der segmentierte Kurvenzug 13 mit Formsegmenten 14 bildet im Unterschied zum ersten Profil 7 des Reibrings 2 eine über den gesamten Umfang zusammenhängende geschlossene Oberfläche 15, da der Synchronringkörper 16 ohne Schlitz ausgeführt ist. Entsprechend dem ersten Profil 7 des Reibrings 2 sind die gesamten Formsegmente 14 des segmentierten Kurvenzugs 13 des Synchronrings 3 als gerade Kurven ausgebildet. D.h, auch der segmentierte Kurvenzug 13 des Synchronrings 3 ist polygonartig ausgebildet und setzt sich passend zum ersten Profil 7 des Reibrings 2 aus zwölf geraden Kurven zusammen, die unter einem Polygonwinkel β von 150°zueinander angeordnet sind. Der segmentierte Kurvenzug 13 ist rotationsymmetrisch zur Synchronringachse 9 ausgebildet.

Bei der in Fig. 4a gezeigten Synchronisierungseinheit 1 ist der segmentierte Kurvenzug 13 des ersten Profils 7 und des zweiten Profils 8 jeweils als ein Polygon ausgebildet, welches sich aus zwölf geraden Kurven zusammensetzt und bei welchem der Polygonwinkel β 150° beträgt. Selbstverständlich kann das Polygon auch aus einer anderen Anzahl von geraden Kurven zusammengesetzt sein oder die geraden Kurven können unter einem anderen Polygonwinkel β zueinander angeordnet sein.

Der Reibring 2 und der Synchronring 3 der in Fig. 4a gezeigten Synchronisierungseinheit 1 sind jeweils aus einem Blechumformteil und aus einem Sinterstahlteil hergestellt. Das erste Profil 7 des Reibringes 2 und das zweite Profil 8 des Synchronringes 3 sind mit einer reibungsverminderten Beschichtung, z.B einer DLC-Beschichtung, versehen.

Somit illustrieren die Fig. 4a-Fig.4d eindrücklich, dass durch die vorliegende Erfindung auf eine komplexe Verzahnung an der äusseren Einbaufläche 402 des Reibrings 2 und der inneren Einbaufläche 301 des Synchronrings 3 verzichtet werden kann.

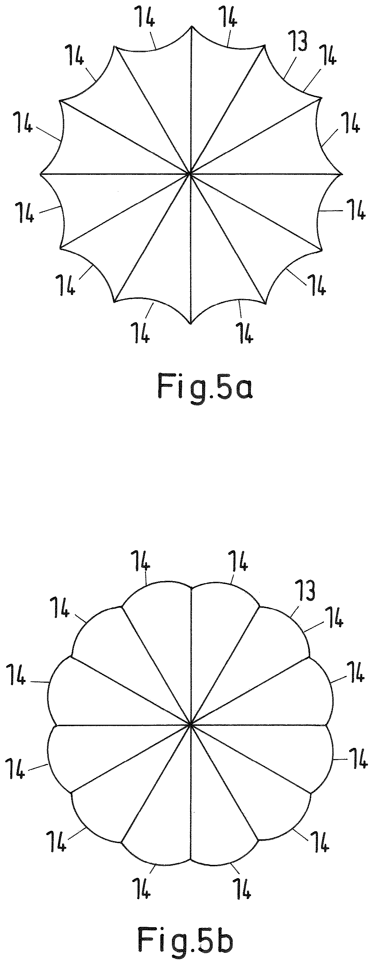

In den Fig. 5a bis Fig.5d sind weitere Ausführungsbeispiele eines segmentierten Kurvenzugs gemäss der Erfindung dargestellt. Die Ausführungsbeispiele des segmentierten Kurvenzugs unterscheiden sich dabei untereinander in der Ausbildung und Anordnung der einzelnen Formsegmente. Die in den Fig. 5a bis Fig.5d gezeigten Ausführungsbeispiele eines segmentierten Kurvenzugs können dabei alle in einer erfindungsgemässen Synchronisierungseinheit nach Fig.4a angewendet werden.

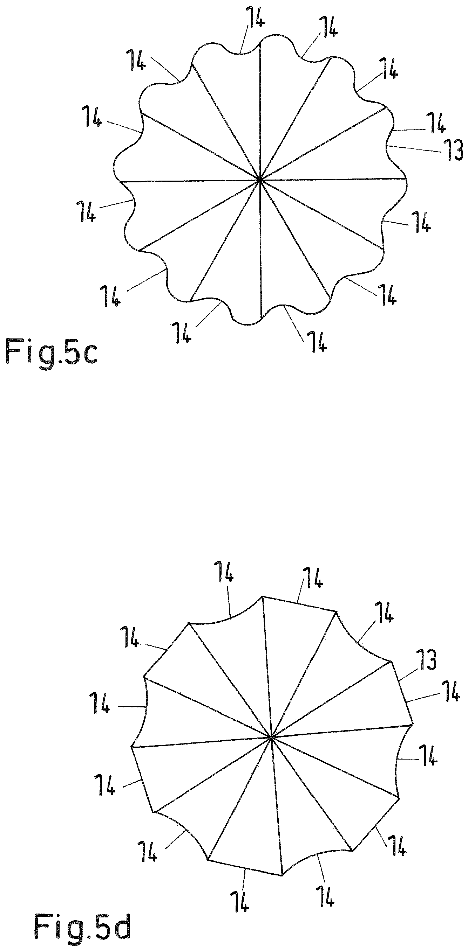

Fig. 5a zeigt ein zweites Ausführungsbeispiel eines segmentierten Kurvenzugs 13 gemäss der Erfindung. Im Unterschied zum Ausführungsbeispiel aus den Fig. 4a bis Fig. 4d sind die Formsegmente 14 des segmentierten Kurvenzugs 13 dabei nicht als gerade Kurven sondern als konkav gebogene Kurven ausgebildet, d.h die Formsegmente sind "splineartig" ausgeführt. Wie aus Fig. 5b hervorgeht, können die Formsegmente 14 des segmentierten Kurvenzugs 13 anstatt konkav auch konvex ausgebildet sein. d.h die Formsegmente 14 sind dann nicht in Richtung einer Achse der Synchronisierungseinheit sondern entgegen einer Achse der Synchronisierungseinheit gekrümmt. Gemäss Fig. 5c ist es auch möglich, dass sich der segmentierte Kurvenzug 13 aus einer Kombination von konvex und konkav gebogenen Kurven 14 zusammensetzt. Der segmentierte Kurvenzug 13 ist somit in Umfangsrichtung über seine gesamte Länge splineartig ausgebildet. Auch ist gemäss Fig. 5d ein Ausführungsbeispiel möglich, bei welchem sich der segmentierte Kurvenzug 13 aus einer Kombination von geraden Kurven 14und gebogenen Kurven 14 zusammensetzt. In den Ausführungsbeispielen Fig. 5a bis 5d des segmentierten Kurvenzugs 13 bildet der segmentierten Kurvenzugs 13 mit den Formsegmenten 14 über den gesamten Umfang des Reibrings beziehungsweise des Synchronrings eine zusammenhängende, geschlossene Oberfläche. Wie aus den Fig.4a und Fig.4c hervorgeht, kann der segmentierte Kurvenzug 13 mit den Formsegmenten 14 auch nur über einen Teil des Umfangs des Reibrings beziehungsweise des Synchronrings eine zusammenhängende, geschlossene Oberfläche bilden.

Die Fig. 5a bis 5d illustrieren somit eindrücklich, dass sich der segmentierte Kurvenzug gemäss der Erfindung aus Formsegmenten unterschiedlicher Geometrie zusammensetzen kann bzw. dass zur Bildung des segmentierten Kurvenzugs gemäss der Erfindung Formsegmente unterschiedlicher Geometrie miteinander kombinierbar sind.

In den gezeigten Ausführungsbeispielen des segmentierten Kurvenzugs gemäss der Erfindung ist der segmentierte Kurvenzug rotationsymmetrisch zur Achse der Synchronisierungseinheit ausgebildet. Selbstverständlich sind auch Ausführungsbeispiele möglich, bei welchen der segmentierte Kurvenzug nicht rotationsymmetrisch zur Achse der Synchronisierungseinheit ausgebildet ist.

## Patentansprüche

1. Synchronisierungseinheit (1) für ein Zahnräderwechselgetriebe eines Fahrzeuges, umfassend einen Reibring (2) mit einer äusseren Einbaufläche (402) und einen Synchronring (3) mit einer inneren Einbaufläche (301), wobei sich die äussere Einbaufläche (402) und die innere Einbaufläche (301) unter einem vorgebbaren Einbauwinkel (α₂) konisch entlang einer axialen Achse (12) der Synchronisierungseinheit (1) erstrecken, und die äussere Einbaufläche (402) des Reibrings (2) als ein erstes in einer um die Achse (12) verlaufenden Umfangsrichtung (U) geometrisch strukturiertes Profil (7) ausgebildet ist und die innere Einbaufläche (301) des Synchronrings (3) als ein korrespondierendes zweites in Umfangsrichtung (U) geometrisch strukturiertes Profil (8) ausgebildet ist, wobei im Einbauzustand das erste Profil (7) des Reibrings (2) in das zweite Profil (8) des Synchronrings (3) derart eingreift, dass der Reibring (2) in radialer Richtung zur Achse (12) und in Umfangsrichtung (U) am Synchronring (3) gesichert ist, **dadurch gekennzeichnet, dass** das erste Profil (7) und das zweite Profil (8) jeweils in Form eines in Umfangsrichtung (U) segmentierten Kurvenzugs (13) umfassend eine Mehrzahl von unmittelbar aneinander anschliessenden Formsegmenten (14) ausgebildet ist, wobei der segmentierte Kurvenzug (13) mit Formsegmenten (14) über zumindest einen Teil des Umfangs eine zusammenhängende geschlossene Oberfläche (15) bildet.

2. Synchronisierungseinheit nach Anspruch 1, wobei die Formsegmente (14) als gerade Kurven und /oder gebogene Kurven, insbesondere konvexe oder konkave Kurven, ausgebildet sind.

3. Synchronisierungseinheit nach Anspruch 2, wobei der segmentierte Kurvenzug (13) sich aus konvex und konkav gebogenen Kurven zusammensetzt.

4. Synchronisierungseinheit nach Anspruch 2, wobei der segmentierte Kurvenzug (13) sich polygonartig aus geraden Kurven (14) zusammensetzt.

5. Synchronisierungseinheit nach Anspruch 4, wobei zwei benachbarte gerade Kurven (14) unter einem Polygonwinkel (β) von 120° bis 160° zueinander angeordnet sind.

6. Synchronisierungseinheit nach einem der Ansprüche 1 bis 5, wobei der segmentierte Kurvenzug (13) zur Achse (12) rotationsymmetrisch ausgebildet ist.

7. Synchronisierungseinheit nach einem der Ansprüche 1 bis 6, wobei am ersten Profil (7) und /oder am zweiten Profil (8) eine Beschichtung, insbesondere eine reibungsvermindernde Beschichtung, z.B eine DLC-Beschichtung, vorgesehen ist.

8. Synchronisierungseinheit nach einem der Ansprüche 1 bis 7, wobei der Reibring (2) und /oder der Synchronring (3) ein Blechumformteil oder ein Sinterstahlteil oder ein geschmiedetes Stahlteil oder ein geschmiedetes Messingteil ist.

9. Zahnräderwechselgetriebe für ein Fahrzeug, insbesondere für einen Personenkraftwagen, einen Transporter oder eine Lastkraftwagen mit einer Synchronisierungseinheit (1) nach einem der Ansprüche 1 bis 8.

10. Reibring (2) für eine Synchronisierungseinheit (1) nach einem der Ansprüche 1 bis 8, umfassend einen konischen Reibringkörper (4) mit einer inneren Reibfläche (401) und einer äusseren Einbaufläche (402), die den Reibringkörper (4) in einer senkrecht zu einer axialen Reibringachse (5) verlaufenden radialen Richtung jeweils begrenzen, wobei sich die innere Reibfläche (401) unter einem vorgebaren Reibwinkel (α₁) und die äussere Einbaufläche (402) unter einem vorgebaren Einbauwinkel (α₂) jeweils konisch entlang der Reibringachse (5) erstrecken, und die äussere Einbaufläche (402) des Reibrings (2) als ein erstes in einer um die Reibringachse (5) verlaufenden Umfangsrichtung (U) geometrisch strukturiertes Profil (7) ausgebildet ist, **dadurch gekennzeichnet dass** das erste Profil (7) in Form eines in Umfangsrichtung (U) segmentierten Kurvenzugs (13) umfassend eine Mehrzahl von unmittelbar aneinander anschliessenden Formsegmenten (14) ausgebildet ist, wobei der segmentierte Kurvenzug (13) mit Formsegmenten (14) über zumindest einen Teil des Umfangs eine zusammenhängende geschlossene Oberfläche (15) bildet.

11. Reibring nach Anspruch 10, wobei die Formsegmente (14) als gerade Kurven und /oder gebogene Kurven, insbesondere konvexe oder konkave Kurven, ausgebildet sind.

12. Reibring nach Anspruch 11, wobei der segmentierte Kurvenzug (13) sich polygonartig aus geraden Kurven zusammensetzt.

13. Synchronring (3) für eine Synchronisierungseinheit (1) nach einem der Ansprüche 1 bis 8, umfassend einen Synchronringkörper (16) mit einer inneren Einbaufläche (301), die sich unter einem vorgebaren Einbauwinkel (α₂) konisch entlang einer Synchronringachse (9) erstreckt, und die innere Einbaufläche (301) des Synchronrings (3) als ein zweites in einer um die Synchronringachse (9) verlaufenden Umfangsrichtung (U) geometrisch strukturiertes Profil (8) ausgebildet ist, **dadurch gekennzeichnet dass** das zweite Profil (8) in Form eines in Umfangsrichtung (U) segmentierten Kurvenzugs (13) umfassend eine Mehrzahl von unmittelbar aneinander anschliessenden Formsegmenten (14) ausgebildet ist, wobei der segmentierte Kurvenzug (13) mit Formsegmenten (14) über zumindest einen Teil des Umfangs eine zusammenhängende geschlossene Oberfläche (15) bildet.

14. Synchronring nach Anspruch 13, wobei die Formsegmente (14) als gerade Kurven und /oder gebogene Kurven, insbesondere konvexe oder konkave Kurven, ausgebildet sind.

15. Synchronring nach Anspruch 14, wobei der segmentierte Kurvenzug (13) sich polygonartig aus geraden Kurven zusammensetzt.
